# EUROPEAN PATENT APPLICATION

(11) **EP 4 459 544 A1**
(43) Date of publication of application: **06.11.2024**
(21) Application number: 23171161.5
(22) Date of filing: 02.05.2023
(51) Int. Cl.: G06T 7/00, G06T 7/11

(54) **METHOD FOR DETECTING AT LEAST ONE LESION OF A PANCREAS OF A PATIENT IN AT LEAST ONE MEDICAL IMAGE**

(71) Applicant: Guerbet, 93420 Villepinte (FR)
(72) Inventor: ABI-NADER, Clément, 75012 Paris (FR); VÉTIL, Rebeca, 75020 Paris (FR); ROHÉ, Marc-Michel, 92120 Montrouge (FR)
(74) Representative: Plasseraud IP

(57) **Abstract**

The invention relates to a method implemented by computer means for Method for detecting at least one lesion of a pancreas of a patient in at least one medical image, for example portal venous computed tomography (CT) scans. A segmentation network is trained in a 5-fold cross-validation manner. Then, outputs of this network are postprocessed to extract imaging features: a normalized lesion risk, the predicted lesion diameter, and the MPD diameter in the head, body, and tail of the pancreas. A logistic regression model is calibrated to predict lesion presence based on said features.

## Description

### FIELD OF THE INVENTION

The present invention relates to a method implemented by computer means for detecting at least one lesion of a pancreas of a patient in at least one medical image.

### BACKGROUND OF THE INVENTION

Pancreatic cancer is currently the 11^{th} most common cancer and the 7^{th} leading cause of cancer-related deaths worldwide. With a predicted incidence expected to increase up to 78% during the period 2018-2040, it is a major healthcare issue on the rise. Due to the increase of pancreatic cancer incidence, combined with its dramatically low 5-year survival rate of 9%, the disease could become the third leading cause of cancer-related deaths by 2025.

Most patients with early pancreatic cancer present with non-specific symptoms hence, if investigated, often undergo routine computer tomography (CT) examination performed in portal venous phase. Image interpretation might be difficult, as in early stages, pancreatic lesions tend to be small (less than 2cm) and isodense, with a reported sensitivity ranging from 58% to 77%. In addition, radiologists' heavy workload as well as their level of expertise and experience might further affect the interpretation of a CT scan. As the disease progresses rapidly, pancreas cancer is mostly detected during late stages for which limited therapeutic options are available, thus explaining the observed low 5-year survival rate. To date only 10% of patients undergo pancreatic resection, the sole curative treatment.

However, in the past years the proportion of patients diagnosed with stage 1A pancreatic cancer has increased. In general, the description of 1A stage of pancreatic cancer includes cancer confined to the pancreas and is no bigger than 2 cm (0.8 inch) across and further, has not spread to nearby lymph nodes or to distant sites. At this 1A stage, the patients are more frequently eligible for pancreatic resection and adjuvant chemotherapy and as such, the 5-year survival rate of these patients now exceeds 80%, which highlights the importance for the earliest possible detection of pancreas cancer. To identify findings that could alert radiologists about the potential presence of pancreatic cancer, studies retrospectively analyzed CT scans of patients with pancreatic cancer before the histopathological diagnosis. A consensus emerged on the fact that subtle secondary signs, such as main pancreatic duct (MPD) dilatation, were often visible up to 1 year before the cancer diagnosis. This is due to the fact that pancreas cancer is mainly a ductal adenocarcinoma and the malignant tumor is responsible for a stricture of the MPD, thus causing upstream dilatation. Dilatation is usually defined as a duct larger than 3mm in the head and 2mm in the body and tail of the pancreas. In addition, enlargement upstream to a stenosis, reported to be a focal disappearing of MPD lumen, is also a pathologic pattern.

Given this context, Deep Learning (DL) methods could play an important role to assist radiologists in their daily practice, by issuing alerts of patients at risk to develop pancreatic cancer. Promising results have been obtained for some pathologies, such as breast cancer, for which a DL model significantly decreased the false positive and false negative rates on two large datasets, while substantially reducing the radiologists' workload. This effort has also been directed towards pancreas cancer with many attempts to use DL for lesion detection. These works proposed DL models to detect pancreatic neoplasms and validated them on independent databases of patients. While they showed promising results, these approaches were purely relying on DL and did not address the need to identify radiological findings predictive of pancreatic cancer, which could improve detection of early-stage lesions.

In the present document, a method allowing to predict patients at risk of pancreas cancer is proposed and evaluated.

### SUMMARY OF THE INVENTION

To that aim, the present document proposes a method implemented by computer means for detecting at least one lesion of a pancreas of a patient in at least one medical image, said method including an inference phase comprising the following steps:
(a) predicting at least one first probability map representing the probability for each pixel or voxel of said image of being part of a pancreatic lesion,
(b) predicting at least one second probability map representing the probability for each pixel or voxel of said image of being part of the pancreas,
(c) predicting at least one third probability map representing the probability for each pixel or voxel of said image of being part of the main pancreatic duct,
(d) segmenting the pancreas, the main pancreatic duct and at least one lesion of said image, based on said probability maps,
(e) determining a head portion, a body portion and a tail portion of said segmented pancreas,
(f) determining a first feature representing a lesion risk based on the first probability map,
(g) determining a second feature representing the size of the lesion,
(h) determining a third feature representing the maximum size of the main pancreatic duct in the head portion of the pancreas,
(i) determining a fourth feature representing the maximum size of the main pancreatic duct in the body portion of the pancreas,
(j) determining a fifth feature representing the maximum size of the main pancreatic duct in the tail portion of the pancreas,
(k) determining a first score based on at least said first, second feature, and at least one of said third, fourth and fifth features, said first score being representative of a probability that the patient has a pancreatic lesion.

A medical image may be defined as a visual representation of internal body structures or functions acquired using various imaging modalities. These images are generated through the use of hardware and software systems that capture and process data, producing two-dimensional (2D) or three-dimensional (3D) images that aid in the diagnosis, treatment planning, and monitoring of various medical conditions. Medical images typically contain information about tissue density, composition, and function and are interpreted by radiologists, physicians, or other medical professionals with specialized training in image analysis.

Said image may be a 3D image.

A medical images may take many different forms, depending on the imaging modality used and the type of medical condition being investigated. However, according to the present document, said image may be a CT-scan image, for example a portal venous CT-scan images.

Also known as computed tomography scans, CT scan images are 3D images created by combining a series of X-ray images taken from different angles around the body. CT scans can provide detailed information about the internal structure and composition of organs, bones, and tissues.

The main difference between a portal CT scan image and a CT scan image is the focus of the imaging. A CT scan image is a type of medical imaging that uses a computed tomography (CT) scanner to produce detailed images of any part of the body. A CT scan can be used to evaluate many different organs and tissues, such as the brain, chest, abdomen, and pelvis, and can be performed with or without the use of contrast dye.

On the other hand, a portal CT scan image is specifically focused on imaging the portal venous system, which includes the veins that drain blood from the gastrointestinal tract, spleen, and pancreas into the liver. A portal CT scan is a type of CT scan that is specifically designed to image the portal venous system in the abdomen, using specialized protocols that optimize the imaging of this system.

A portal CT scan can help to diagnose and monitor a range of conditions affecting the liver and pancreas, including tumors, infections, and inflammation. It can also help to evaluate the response to treatment and guide further management of the condition. The portal venous system is an important component of the blood supply to the liver and other abdominal organs, and a portal CT scan can provide valuable information about its function and anatomy.

Inference phase, in the context of machine learning, refers to the stage where a trained model is used to make predictions on new or unseen data. During this phase, the model takes in the input data and produces an output based on the learned patterns from the training data.

In other words, the inference phase is the process of applying a trained model to real-world data to make predictions or decisions.

A probability map (also known as a probability density map or probability distribution map) may refer to a representation of the likelihood or probability of a particular event occurring at different locations or regions within an input space.

More specifically, in the context of image processing, a probability map may be a 2D or 3D grid or heatmap that assigns a probability value to each pixel or voxel in an image, indicating the likelihood that the pixel or voxel belongs to a certain class or category. For example, in object detection, a probability map can be used to identify the location and extent of an object in an image by assigning higher probabilities to pixels or regions that are more likely to belong to the object of interest.

Probability maps are commonly used in machine learning to represent the uncertainty or variability associated with different outcomes, and they can be used to make predictions, classify inputs, or guide decision-making processes.

Segmentation may refer to the process of dividing or partitioning an input image or data into multiple segments or regions (set of pixels or voxels) based on certain criteria, such as color, texture, intensity, shape, or other features. More precisely, image segmentation is the process of assigning a label, a class or a category to every pixel or voxel in an image such that pixels with the same label share certain characteristics. The goal of segmentation may be to identify and isolate different objects or regions of interest within an image or data, so that they can be analyzed, processed or classified separately.

Several algorithms and techniques may be used for segmentation, including thresholding, clustering, edge detection, region growing, and deep learning-based approaches.

In digital image processing and computer vision, a feature is a piece of information about the content of an image, typically about whether a certain region of the image has certain properties. Features may be specific structures in the image such as points, edges or objects. Features may also be the result of a general neighborhood operation or feature detection applied to the image. Other examples of features are related to motion in image sequences, or to shapes defined in terms of curves or boundaries between different image regions.

More broadly a feature is any piece of information which is relevant for solving the computational task related to a certain application. This is the same sense as feature in machine learning and pattern recognition generally, though image processing has a very sophisticated collection of features.

The pancreas is a glandular organ located in the abdomen, which plays an important role in the digestive system as well as in regulating blood sugar levels. The head of the pancreas is the broadest and most right-sided part of the organ, which is located next to the duodenum (the first part of the small intestine) and the bile ducts. The tail of the pancreas is the narrow, left-sided end of the organ, which extends towards the spleen. The body of the pancreas is the middle section of the organ, which connects the head and tail and lies behind the stomach.

These three portions of the pancreas may be important to identify for diagnostic and treatment purposes, as different diseases and conditions may affect specific parts of the organ.

A pancreatic lesion may refer to any abnormal growth, mass or area of tissue in the pancreas that is different in appearance or texture compared to surrounding tissue. This can include cysts, tumors, or other abnormal tissue growths, which can be either benign or malignant. Pancreatic lesions can be detected through medical imaging tests such as ultrasound, CT scan or MRI, and may require further evaluation through biopsy or other diagnostic procedures to determine their nature and potential impact on a person's health. The management and treatment of a pancreatic lesion will depend on factors such as the size, location, and type of lesion, as well as the individual's overall health and medical history.

The above-mentioned first score may quantify the likelihood that a detected area in the pancreas is a lesion (such as a tumor, cyst, or other abnormality) whether malignant or benign. The goal of said first score is to provide clinicians with an objective tool to help guide their management decisions, such as whether to recommend further diagnostic testing or to proceed with treatment.

Said first score may appear in an interface as such or in an interpreted manner informing a user of the presence or absence of a lesion based on a threshold. For example, if the first score is greater than said threshold, said interface may display a message informing the user of the presence or risk of presence of a pancreatic lesion. In other words, a classification (for example lesion / no lesion) may derive from said first score.

Said first score may be determined based on only said first, second, and at least one of the third, fourth and fifth features.

Said first score may be based at least on the first feature, second feature and the maximum of the third, fourth and fifth features. It should be noted that, in such case, the maximum of said third, fourth and fifth features is a value based on said third, fourth and fifth features as said third, fourth and fifth features have to be computed to determine their maximum value.

Several types of pancreatic lesions may occur, some of which are benign (non-cancerous) and some of which are malignant (cancerous). Here are some examples of possible pancreatic lesions:
- Pancreatic cysts: These are fluid-filled sacs that can develop in the pancreas. Most pancreatic cysts are benign, but some may be precancerous or cancerous.
- Pancreatic pseudocysts: These are collections of fluid and debris that can form after an episode of acute pancreatitis. Pseudocysts are usually benign but can become infected or rupture.
- Serous cystadenomas: These are benign pancreatic tumors that are filled with clear, watery fluid.
- Mucinous cystic neoplasms: These are precancerous pancreatic tumors that are filled with thick, sticky mucus.
- Intraductal papillary mucinous neoplasms: These are precancerous pancreatic tumors that grow inside the pancreatic ducts and produce mucus.
- Solid pseudopapillary neoplasms: These are rare pancreatic tumors that are usually benign but can become malignant.
- Pancreatic neuroendocrine tumors: These are rare tumors that arise from the cells that produce hormones in the pancreas. Most pancreatic neuroendocrine tumors are non-cancerous, but some can be malignant.
- Pancreatic adenocarcinoma: This is the most common type of pancreatic cancer, which usually arises from the cells that line the ducts of the pancreas.
- Pancreatic lymphoma: This is a rare type of pancreatic cancer that originates in the lymphatic tissue of the pancreas.
- Metastatic pancreatic tumors: These are tumors that originate in other parts of the body and spread to the pancreas, such as from the lung, breast, or colon.

The first feature representing a lesion risk based on the first probability map, may be a number between 0 and 1.

To calculate this first feature, all the candidate pixels or voxels (for example all the pixels or voxels associated to a probability higher to 0) that are outside the segmented pancreas may be eliminated. Then, for each remaining connected component, a lesion risk comprised for example between 0 and 1 may computed by averaging the probabilities of all its pixels or voxels.

Connected components with a lesion risk lower than 0,05 may be automatically removed.

In other words, wherein step (f) may comprise the following sub-steps:
- eliminate all the pixels or voxels that are not connected to the segmented pancreas,
- for each remaining connected component compute said lesion risk by averaging the probabilities of all its pixels or voxels and eliminate connected components with a lesion risk lower than a threshold.

Said threshold may be lower than 0.05 for example..

A connected component is a set of pixels that are connected to each other through a neighborhood relationship. A connected component may be a group of pixels that forms a coherent object or region in an image.

A common method for identifying connected components in an image is through the use of connected component labeling algorithms. These algorithms analyze the relationships between the pixels in the image and assign a unique label to each connected component. Once the connected components have been labeled, various operations can be performed on them, such as calculating their size, shape, or orientation, or applying filters to enhance or remove them.

The second feature representing the size of the lesion may be the maximum diameter of the corresponding segmented pancreatic lesion. To determine the maximum diameter of said lesion, once the lesion is segmented, its diameter may be measured along the axial view slice by slice in the case of a 3D image, using for example the skimage library. The 2D Feret diameter of each slice may be calculated. If a lesion is not segmented the diameter may automatically be set to 0.

The second feature representing the size of the lesion may also be determined by:
- extracting the contour of the lesion using edge detection algorithms or morphological operations. The contour is the boundary of the lesion and can be used to measure its size
- measuring the maximum diameter of the lesion by finding the longest distance between two points on the contour of the lesion. This can be done using distance transform, skeletonization, or other geometric measurements.

The first, second and third probability maps may be obtained using at least one convolutional neural network or model, for example a fully convolutional neural network.

Said convolutional neural network may be a nnUNet.

The nnUNet automatically designs a segmentation pipeline based on a UNet architecture by relying on heuristics applied on the data that allow it to estimate key parameters. The dataset properties are estimated to automatically perform a pre-processing step. This is followed by the automatic definition of design choices for the model (number of layers, convolutional kernel sizes, convolutional blocks, etc...). A training procedure is also implemented (data augmentation, scheduled learning rate, etc...).

The first, second and third probability maps may be obtained using a plurality or ensemble of models or convolutional neural networks, each model being able to predict said first, second and third probability maps.

Said ensemble of models (for example an ensemble of k models) may be trained using a k-fold cross-validation setting. The outputs of said models (each probability maps and segmentation of the pancreas, pancreatic lesion and main pancreatic duct), are subsequently averaged pixel-wise or voxel-wise to produce single final probability maps. The final segmentation is obtained by assigning to each pixel or voxel its more likely class (i.e. the class with maximum probability). The lesion probability map is obtained by looking at the probability of every pixel or voxel to be a lesion.

More generally k-fold cross-validation is a known technique used in machine learning to evaluate the performance of a model and to prevent overfitting. In k-fold cross-validation, the original dataset is divided into k subsets or folds of approximately equal size. The model is then trained on k-1 of these folds and validated on the remaining fold.

The k-fold cross-validation process is repeated k times, with each fold being used as the validation set once. The performance of the model is then averaged across all k iterations to obtain a more reliable estimate of its performance.

During training, the image pre-processing, i.e. resampling and intensity normalization, may be entirely determined and performed by the nnUNet.

The identification of the head portion, the body portion and the tail portion of the segmented pancreas may be obtained by performing the following steps.
- along the axial view, extract the morphological skeleton of the pancreas segmentation slice by slice, for example using the skeletonize function from the library skimage (or scikit-image),
- obtain a 3D skeleton of the pancreas and transform the obtained 3D pancreas skeleton into a graph, for example using the network library,
- given the point of the image which is the located at the most right anterior inferior part of the abdomen, identify the point of the graph which is the most distant to it. This point can therefore be considered as the tail extremity of the pancreas,
- identify the head of the pancreas by looking at the point in the graph which is the most distant to the tail,
- once head and tail have been identified, compute the shortest path between head and tail (for example using the Dijkstra algorithm) to finally obtain the centerline passing through the pancreas and connecting its two extremities,
- divide the centerline in three portion, i.e. head, body and tail portions. First 25% may be considered as the tail, following 50% may be the body and the last 25% may be the head.
- for each voxel of the pancreas segmentation, find its closest point on the centerline and assign its corresponding head, body or tail location or portion.

Once the pancreas is subsegmented, the main pancreatic duct may also be subsegmented. For each voxel of the segmented main pancreatic duct, its closest point on the centerline may be computed. Then a location on the head, body or tail portion of the segmented pancreas may be assigned to the voxel depending on the location of its closest point on the centerline.

Once this is done, the diameter of the main pancreatic duct can be measured in each portion (head, body, tail). Along the axial view and slice by slice the diameter of the main pancreatic duct may be computed, for example using the IMEA library. In addition, it can be checked if the diameter was computed in the head, body or tail.

Based on this, many measures can be extracted: Min, max, mean, median, percentiles of the main pancreatic duct diameter in the head, body and tail. Measures in the three parts can be aggregated to compute min, max, mean, median, percentiles in the whole main pancreatic duct.

Another advantage of sub-segmenting the pancreas into the tail, body and head portions is that the lesion location can also be extracted by computing the distance between the lesion voxels and the centerline. Once this is done, the portion where the majority of lesion voxels are located (head, body and tail) may be determined and be assigned as the lesion location.

Overall, the pancreas sub-segmentation may be used to identify the location of other anatomical structure in the pancreas and extract features regionally.

Computation may be carried out using the IMEA library.

The maximum value of the main pancreatic duct diameter in the pancreas may also be computed by taking the maximum diameter between head, body, and tail portion. For each portion, the main pancreatic duct diameter was set to 0 if there is no segmentation.

The determination of said first score may be performed by a first logistic regression model.

The method according to the present document may also comprise a step of a determining a second score based on at least said third, fourth and fifth features, said second score being representative of a probability that main pancreatic duct is dilated.

Said second score may appear in an interface as such or in an interpreted manner informing a user of the dilated state or non-dilated state of the main pancreatic duct, based on a threshold. For example, if the second score is greater than said threshold, said interface may display a message informing the user of the dilated stated of the main pancreatic duct. In other words, a classification (for example dilatated / non-dilated) may derive from said second score.

Said second score may be determined based on only said third, fourth and fifth features.

The determination of said second score may be performed by a second logistic regression model.

Said first and/or second logistic regression models may be trained with default hyperparameters using the Scikit-Learn library.

In addition, to the above-mentioned features, the first score and/or the second score may also be determined based on at least one other feature from the following list:
- First order statistics of the pancreas diameter, lesion diameter, main pancreatic duct diameter and/or common bile duct diameter. These features can be regionalized for each portion (head, body, tail) of the pancreas using the pancreas sub-segmentation, thus creating new features.
- lesion location, for example location of the lesion in said head, body and/or tail portion,
- at least one radiomics features of the pancreas, lesion, main pancreatic duct and/or common bile duct. These features can be regionalized for each portion (head, body, tail) of the pancreas using the pancreas sub-segmentation, thus creating new features.
- 3D shape radiomics features of the pancreas, lesion, main pancreatic duct and/or common bile duct. These features can be regionalized for each portion (head, body, tail) of the pancreas using the pancreas sub-segmentation.
- 2D shape radiomics features and/or first order statistics of these features for pancreas, main pancreatic duct, lesion and/or common bile duct. These features can be regionalized for each portion (head, body, tail) of the pancreas using the pancreas sub-segmentation.

In the field of medicine, radiomics is a method that extracts a large number of features from medical images using data-characterization algorithms. These features, termed radiomic features, have the potential to uncover patterns and characteristics on images that fail to be appreciated by the naked eye.

First-order statistics, also known as descriptive statistics, are summary measures that describe basic features of a dataset without making any assumptions about its underlying distribution. These statistics include measures of central tendency, such as the mean, median, and mode, which provide information about the typical or average value of the data. They also include measures of dispersion or variability, such as the range, variance, and standard deviation, which provide information about how spread out the data is. Other first-order statistics include measures of skewness and kurtosis, which describe the shape of the distribution. These statistics are widely used in data analysis and can help to provide insights into the characteristics of a dataset.

Radiomic features can be divided into said groups:
- First Order Features
- 3D shape features
- 2D shape features
- Gray Level Co-occurrence Matrix (GLCM) Features
- Gray Level Size Zone Matrix (GLSZM) Features
- Gray Level Run Length Matrix (GLRLM) Features
- Neighbouring Gray Tone Difference Matrix (NGTDM) Features
- Gray Level Dependence Matrix (GLDM) Features

More particularly:
- First order features describe the distribution of voxel intensities within the image region defined by the mask through commonly used and basic metrics. Said first order features may comprise at least one of the following features: Energy, Total Energy, Entropy, Minimum, 10^{th} percentile, 90^{th} percentile, Maximum, Mean, Median, Interquartile Range, Range, Mean Absolute Deviation (MAD), Robust Mean Absolute Deviation (rMAD), Root Mean Squared (RMS), Standard Deviation, Skewness, Kurtosis, Variance, Uniformity.
- 3D shape features are descriptors of the three-dimensional size and shape of the ROI. These features are independent from the gray level intensity distribution in the ROI and are therefore only calculated on the non-derived image and mask. Said 3D shape features may comprise at least one of the following features: Mesh Volume, Voxel Volume, Surface Area, Surface Area to Volume ratio, Sphericity, Compactness 1, Compactness 2, Spherical Disproportion, Maximum 3D diameter, Maximum 2D diameter (Slice, Row or Column), Major Axis Length, Minor Axis Length, Least Axis Length, Elongation, Flatness,
- 2D shape features are descriptors of the two-dimensional size and shape of the ROI. These features are independent from the gray level intensity distribution in the ROI and are therefore only calculated on the non-derived image and mask. Said 2D shape features may comprise at least one of the following features: Mesh Surface, Pixel Surface, Perimeter, Perimeter to Surface ratio, Sphericity, Spherical Disproportion, Maximum 2D diameter, Major Axis Length, Minor Axis Length, Elongation.

These radiomics features are all defined at the url https://pyradiomics.readthedocs.io/en/latest/features.html# and may be implemented through the use of the library pyradiomics.

The mathematical definitions of these features are independent of imaging modality and can also be found in the literature:
- Galloway, Mary M (1975). "Texture analysis using gray level run lengths". Computer Graphics and Image Processing. 4 (2): 172-179. doi:10.1016/S0146-664X(75)80008-6.
- Pentland AP (June 1984). "Fractal-based description of natural scenes". IEEE Transactions on Pattern Analysis and Machine Intelligence. 6 (6): 661-74. doi:10.1109/TPAMI.1984.4767591. PMID 22499648. S2CID 17415943.
- Amadasun M, King R (1989). "Textural features corresponding to textural properties". IEEE Transactions on Systems, Man, and Cybernetics. 19 (5): 1264-1274. doi:10.1109/21.44046.
- Thibault G, Angulo J, Meyer F (March 2014). "Advanced statistical matrices for texture characterization: application to cell classification". IEEE Transactions on Bio-Medical Engineering. 61 (3): 630-7. doi:10.1109/TBME.2013.2284600. PMID 24108747. S2CID 11319154.

The common bile duct may be determined through the use of a probability map and/or segmentation, in a manner similar to the determination of the main pancreatic duct.

The present document also proposes a computer software, comprising instructions to implement at least a part of the method according the present document when the software is executed by a processor.

The present document also proposes a computer device comprising:
- an input interface to receive medical images,
- a memory for storing at least instructions of a computer program according to preceding claims,
- a processor accessing to the memory for reading the aforesaid instructions and executing then the method according to the present document,
- an output interface to provide an indication based on the first score and/or the second score.

The present document also proposes a computer-readable non-transient recording medium on which a computer software is registered to implement the method according to the present document, when the computer software is executed by a processor.

### BRIEF DESCRIPTION OF THE DRAWINGS

Other features, details and advantages will be shown in the following detailed description and on the figures, on which:
- figure 1 schematically shows an example of a computer device according to the present document,
- figure 2 illustrate the data used to build the training set and the test set,
- figure 3 shows the pipeline of the training phase of the method according to the present document,
- figure 4 shows the pipeline of the inference phase of the method according to the present document,
- figure 5 illustrate the sub-segmentation of three different segmented pancreas,
- figures 6 to 9 illustrates examples of the model segmentations, where the left image illustrates the input image and the right image illustrates the segmented elements on said image (pancreas in red,pancreatic lesion in green and main pancreatic duct in blue).
- figures 10 and 11 illustrate the model performances on the test set.

The annexed drawing includes meaningful colors. Although the present application is to be published in black and white, a colored version of the annexed drawing was filed before the Office.

### DETAILED DESCRIPTION OF A PREFERRED EMBODIMENT

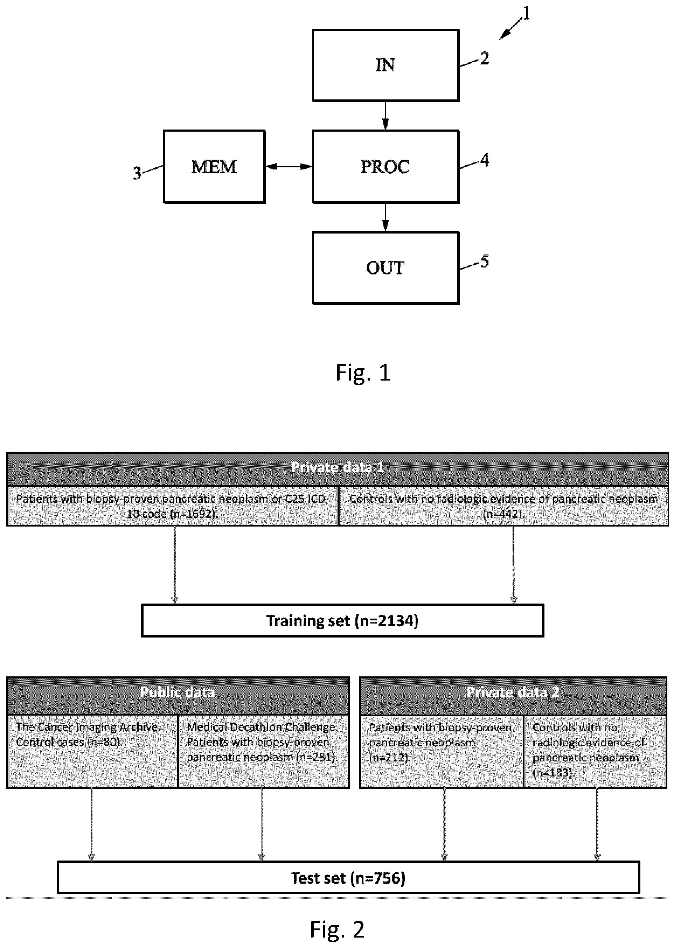

Figure 1 schematically shows an example of a computer device 1 according to the invention. Said computer device 1 comprises:
- an input interface 2,
- a memory 3 for storing at least instructions of a computer program,
- a processor 4 accessing to the memory 3 for reading the aforesaid instructions and executing the method according to the present document,
- an output interface 5.

### Dataset

Data was collected from 9 medical centers in Europe, USA, and Brazil. Inclusion criteria were as follows:
(i) presence of a portal venous CT scan;
(ii) maximum slice thickness of 3mm;
(iii) for patient with confirmed pancreatic neoplasm, studies were acquired prior to any treatment or surgery.

This led to a total of 2890 cases that were further split in a training and independent testing set of 2134 and 756 subjects, respectively (see Figure 2).

The training set was composed of portal venous CT scans of 2134 patients from 5 institutions, among which 1692 had a pancreatic neoplasm. Diagnosis was either obtained via the biopsy report for 78% of the subjects, or through the C25 code related to pancreatic neoplasms in the International Classification of Diseases (ICD-10) for the rest of the subjects.

The training set was also composed of 442 control subjects with no evidence of pancreatic lesion according to their radiologic report.

Table 1 below describes the patients characteristics.

**Table1: Demographic and clinical information for the different datasets. If not specified data are number of patients with percentages in parentheses. * Data are medians with interquartile range in square brackets. CT: Computed Tomography. GE: General Electric. PDAC: Pancreatic Ductal Adenocarcinoma. NET: Neuroendocrine Tumor. IPMN: Intraductal Papillary Mucinous Neoplasm. MCN: Mucinous Cystic Neoplasm. SCN: Serous Cystadenoma. NA: Not Available.**

| | | Training set (n=2134) | Test set (n=756) |
|---|---|---|---|
| Age* (year) | | 64 [56, 73] | NA |
| Sex | | | NA |
| | M | 960 (45) | |
| | F | 1174 (55) | |
| CT manufacturer | | | NA |
| | Philips | 1113 (52) | |
| | Siemens | 168 (8) | |
| | GE | 309 (14) | |
| | Toshiba | 114 (5) | |
| | Unknown | 430 (21) | |
| Pancreatic lesions | | | |
| | Yes | 1692 (80) | 493 (65) |
| | No | 442 (20) | 263 (35) |
| Solid lesions | | 1476 (87) | 421 (85) |
| | PDAC | 1184 (80) | 360 (85) |
| | NET | 134 (9) | 49 (12) |
| | Unclassified | 158 (11) | 12(3) |
| Cystic lesions | | 216 (13) | 72 (15) |
| | IPMN | 81 (38) | 18 (25) |
| | MCN | 34 (16) | 0 (0) |
| | SCN | 42 (20) | 1 (1) |
| | Unclassified | 59 (26) | 53 (74) |
| Lesions size (cm)* | | 3.4 [2.3, 4.9] | 2.4 [2.0, 3.2] |
| Main Pancreatic Duct | | | |
| | Dilated | 907 (43) | 276 (36) |
| | Non dilated | 1227 (57) | 480 (64) |
| | Diameter* (mm) | 4.5 [3.5, 6.5] | 6.0 [4.1, 8.8] |

The 2134 subjects were composed of 1174 (55%) women and 960 men (45%) and showed a median age of 64 years old (range [56, 73] years). 1184 patients had Pancreatic Ductal Adenocarcinoma (PDAC), 134 had Neuroendocrine Tumor (NET) and 158 had unclassified solid lesion. There were also 81 subjects with Intraductal Papillary Mucinous Neoplasm (IPMN), 34 with Mucinous Cystic Neoplasm (MCN) and 42 with Serous Cystadenoma (SCA), as well as 59 subjects with unclassified cystic lesion. Finally, 43% (907) of the subjects had dilated MPD.

The independent test set included 756 subjects collected from both public and private data in 4 institutions (see Figure 2). These institutions were different from the ones used in the training set. Public data contained 361 portal venous CT scans among which 281 had a pancreatic lesion and 80 were healthy cases. Cancer cases were retrieved from the Medical Decathlon Challenge. Control subjects were accessed through the Cancer Imaging Archive pancreas CT dataset. The private dataset was composed of 212 portal venous CT scans of patients with histopathological confirmation of pancreatic neoplasm, as well as 183 portal venous CT scans from a second medical institution with no radiologic evidence of pancreatic lesion. Demographic information was not available for the subjects from the test set. This database was composed of patients with PDAC (n=360), NET (n=48) and unclassified solid lesions (n=12), as well as IPMN (n=18) and unclassified cystic lesions (n=53) (see Table 1). Finally, 276 subjects had dilated MPD.Annotation Protocol

Each portal venous CT scan was reviewed and annotated by one of a group of 9 radiologists. The annotators segmented the pancreas on each image. When a lesion was identified by the radiologist it was systematically segmented. The radiologists characterized the tumor type based on the CT scan. Possible types were: PDAC, NET, IPMN, MCN and SCA. Cases for which the lesion type could not be determined were labeled as unclassified. Finally, the radiologists segmented the MPD when it was visible and visually assessed MPD dilatation.

### Detection pipeline

### Segmentation

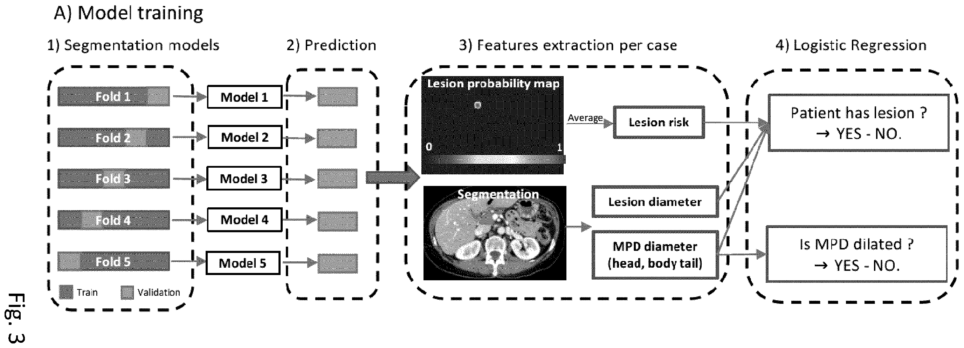

A 3D nnUNet was trained to segment the pancreas, lesions and the MPD in a 5-fold cross-validation setting. Image preprocessing, i.e resampling and intensity normalization, was entirely determined and performed by the nnUNet. When applied on a new image, the trained nnUNet generated a segmentation of the pancreas, pancreatic lesion and MPD, as well as a lesion probability map assigning to each voxel a probability to be a lesion (cf. Figure 3).

In inference phase, the 5 nnUNets are used to each predict a probability map assigning to each voxel the probability to be pancreas, lesion or MPD. These 5 lesion probability maps are subsequently averaged voxel-wise to produce a single final probability map. The final segmentation is obtained by assigning to each voxel its more likely class (i.e. the class with maximum probability). The lesion probability map is obtained by looking at the probability of every voxel to be a lesion.

### Feature extraction

Using the output of the nnUNet, features were extracted as follows:
(i) a lesion risk between 0 and 1, computed based on the 3D probability map given by the nnUNet. To do so, all the candidate lesions outside the pancreas were eliminated using the segmentation map. Then for each connected component a lesion risk between 0 and 1 was computed by averaging the probabilities of all its voxels. Connected components with a lesion risk lower than 0.05 were automatically removed;
(ii) the maximum diameter of the lesion segmented by the nnUNet. Once the lesion is segmented, its diameter can be measured along the axial view slice by slice using the skimage library. The 2D Feret diameter of each slice can be measured and many values can be computed: min, max, mean, median, percentiles. If a lesion is not segmented the diameter is automatically set to 0. The common bile duct may also be segmented. Once a segmentation network is trained, the exact same technique could be used to compute the diameter of the common bile duct.
(iii) the maximum MPD diameter in the head, body, and tail of the pancreas. To measure the MPD diameter regionally, we first need to identify the head, body, and tail of the pancreas. This is done by performing the following steps:
   1) Segmenting the pancreas (using said nnUNet).
   2) Along the axial view, extracting the morphological skeleton of the pancreas segmentation slice by slice using the skeletonize function from skimage.
   3) Obtaining a 3D skeleton of the pancreas that is transformed into a graph using the network library.
   4) Given the point of the image which is the located at the most right anterior inferior part of the abdomen, identifying the point of the graph which is the most distant to it. This point can therefore be considered as the tail extremity of the pancreas.
   5) Identifying the head of the pancreas by looking at the point in the graph which is the most distant to the tail.
   6) Once head and tail have been identified, computing the shortest path between head and tail by using the Dijkstra algorithm, in order to obtain the centerline passing through the pancreas and connecting its two extremities.
   7) Dividing the centerline in three parts. First 25% is considered as the tail, following 50% is the body and the last 25% is the head.
   8) For each voxel of the pancreas segmentation, finding its closest point on the centerline and assigning its corresponding location.

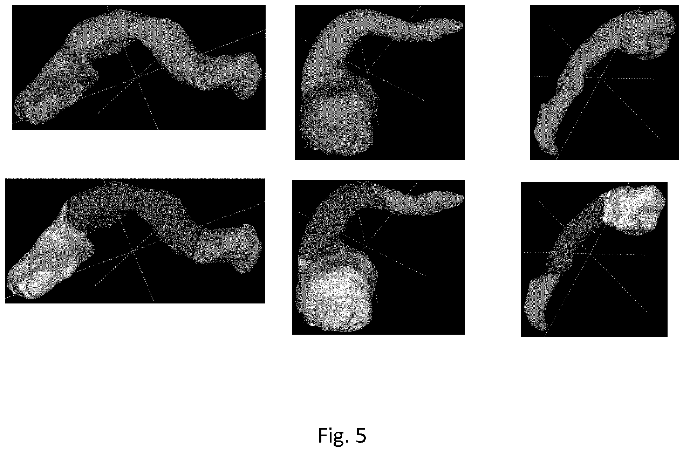

Figure 5 illustrate how this technique allows to identify the pancreas in three subparts. This figure shows three different segmented pancreases (in red in the top images) as well as the result of the sub-segmentation (in the bottom images), with the head (green), body (blue) and tail (red) as sub-segmented.

Once the pancreas is sub-segmented, the MPD can also be sub-segmented. For each voxel of the MPD segmentation, its closest point on the centerline is computed. Then a location (head, body, tail) is assigned to the voxel depending on the location of its closest point on the centerline.

Once this is done, the diameter of the MPD can be measured in each part. Along the axial view and slice by slice the diameter of the MPD is computed using the IMEA library. In addition we look if the diameter was computed in the head, body or tail. Based on this many measures can be extracted: Min, max, mean, median, percentiles of the MPD diameter in the head, body and tail.

Measures in the three parts can be aggregated to compute min, max, mean, median, percentiles in the whole MPD.

Another advantage of sub-segmenting the pancreas is that the lesion location can also be extracted by computing the distance between the lesion voxels and the centerline. Once this is done it is possible to identify where the majority of lesion voxels are located (head, body and tail) and assign the result as the lesion location.

Overall the pancreas sub-segmentation can be used to identify the location of other anatomical structure in the pancreas and extract features regionally.

Computation was carried out using the IMEA 20 library. The maximum value of the MPD diameter in the pancreas was also computed by taking the maximum diameter between head, body, and tail. For each region the MPD diameter was set to 0 if there was no segmentation.

### Logistic Regression

It is proposed to predict lesion presence in a patient as well as MPD dilatation using two logistic regression models relying on the features previously defined. To do so, the nnUNet was applied on the validation set of each fold, leading to a total of 2134 3D probability maps and segmentations, from which features were extracted. Two logistic regression models with default hyperparameters were trained using the Scikit-Learn library.

The first one predicted lesion presence based on three features:
1) lesion risk;
2) lesion diameter;
3) maximum MPD diameter in the pancreas.

The second one predicted MPD dilatation using the MPD diameter in the head, body, and tail of the pancreas.

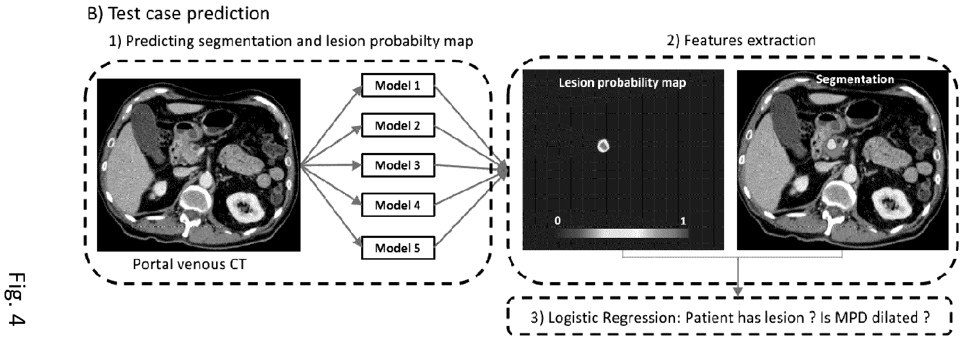

Once the two logistic regressions were trained, evaluation of a test subject comprised three steps:
1) computing the lesion probability map as well as the segmentation of the pancreas, lesion and MPD using the nnUNet;
2) features extraction;
3) applying the two logistic regression models previously trained to predict lesion presence as well as MPD dilatation (see Figure 4).

In this example, lesion risk, max lesion diameter, and max MPD diameter were used to predict lesion presence. Regarding MPD, the MPD diameter in head, body, and tail were considered.

In addition, to the above-mentioned features, each logistic regression model may also use as an input feature at least one other feature from the following list:
- First order statistics of the pancreas diameter, lesion diameter, main pancreatic duct diameter and/or common bile duct diameter. These features can be regionalized for each portion (head, body, tail) of the pancreas using the pancreas sub-segmentation, thus creating new features.
- lesion location, for example location of the lesion in said head, body and/or tail portion,
- at least one radiomics features of the pancreas, lesion, main pancreatic duct and/or common bile duct. These features can be regionalized for each portion (head, body, tail) of the pancreas using the pancreas sub-segmentation, thus creating new features.
- 3D shape radiomics features of the pancreas, lesion, main pancreatic duct and/or common bile duct. These features can be regionalized for each portion (head, body, tail) of the pancreas using the pancreas sub-segmentation.
- 2D shape radiomics features and/or first order statistics of these features for pancreas, main pancreatic duct, lesion and/or common bile duct. These features can be regionalized for each portion (head, body, tail) of the pancreas using the pancreas sub-segmentation.

### Statistical Analysis

To evaluate performances, the receiver operating characteristic (ROC) curve was constructed by plotting sensitivity against false positive rate at different thresholds. The area under the curve (AUC) was measured, as well as sensitivity, specificity, positive predictive value (PPV) and negative predictive value (NPV) at the operating point maximizing the balanced accuracy. The evaluation was performed at the case-level for both the logistic regression estimating lesion presence and the logistic regression predicting MPD dilatation. For instance, in the case of lesion detection, sensitivity was defined as the ratio of the number of patients correctly detected with a lesion by the model to the total number of patients with a pancreatic lesion. Computation of the other metrics was defined accordingly.

Bootstrap sampling was used to provide median values and 95% confidence intervals (CI) for AUC, sensitivity, specificity, PPV and NPV.

Finally, segmentation performances were evaluated by calculating the Dice and the Normalized Surface Dice (NSD) scores between the reference and predicted segmentation for each test patient. The NSD is well-suited to evaluate small structures such as the MPD, as it allows a tolerance error between the reference and predicted segmentation21. In this study, the tolerance error was set to 2mm along each spatial dimension.

### Results

### Detecting Patients with Pancreatic Neoplasms

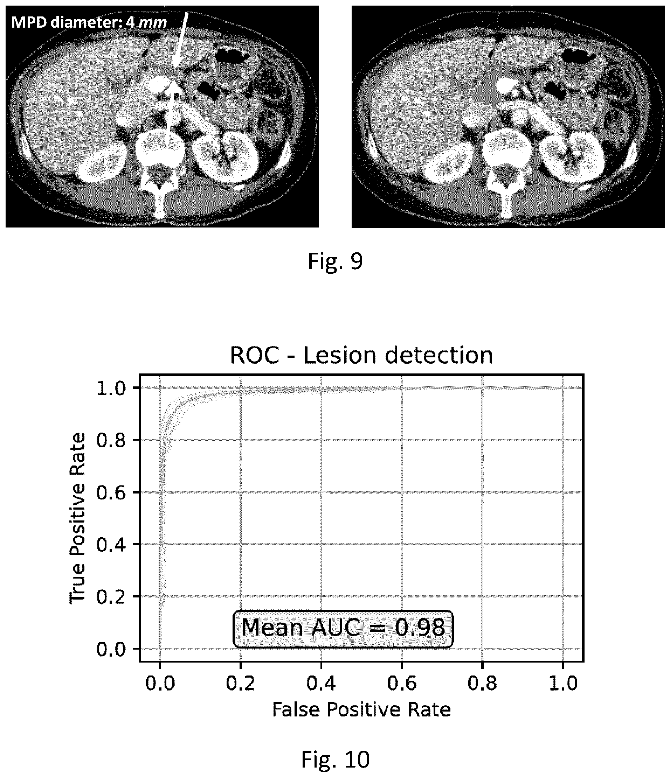

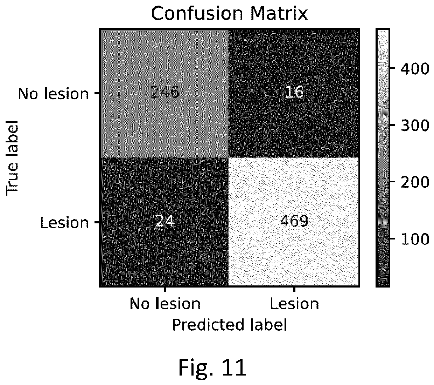

The model performances on the test set are reported in Figures 10 and 11 and in the following Table 2.

Figure 10 illustrates the ROC (Receiver Operating Characteristic) curve of the logistic regression model predicting lesion presence (AUC: Area Under the Curve). The central line represents the average curve and shadowed areas the 95% confidence interval. Figure 11 is the confusion matrix of the model obtained at the operating point maximizing the balanced accuracy.

**Table 2: Evaluation metrics obtained by our model for lesion detection on the test set as well as on specific subsets of patients. For each group in parenthesis, number of patients with pancreatic neoplasm to the total number of patients. Data are median values with 95% confidence interval in square brackets. AUC: Area Under the Curve. PPV: Positive Predictive Value. NPV: Negative Predictive Value. D: Diameter. PDAC: Pancreatic Ductal Adenocarcinoma. NET: Neuroendocrine Tumor. IPMN: Intraductal Papillary Mucinous Neoplasm.**

| | | AUC | Sensitivity | Specificity | PPV | NPV |
|---|---|---|---|---|---|---|
| Test set (493/756) | | 0.98 [0.97, 0.99] | 0.94 [0.92, 0.97] | 0.95 [0.92, 0.98] | 0.97 [0.96, 0.99] | 0.90 [0.85, 0.94] |
| Public data (281/361) | | 0.99 [0.98, 0.99] | 0.94 [0.88, 0.98] | 0.95 [0.90, 1.0] | 0.99 [0.97, 1.0] | 0.82 [0.67, 0.94] |
| Lesions characteristics | | | | | | |
| D ≤2*cm* (123/386) | | 0.97 [0.95, 0.98] | 0.94 [0.87, 0.98] | 0.91 [0.85, 0.96] | 0.83 [0.74, 0.92] | 0.97 [0.94, 0.99] |
| | Isodense (56/319) | 0.97 [0.95, 0.99] | 0.95 [0.87, 1.0] | 0.94 [0.85, 0.98] | 0.78 [0.57, 0.90] | 0.99 [0.97, 1.0] |
| Lesions type | | | | | | |
| | PDAC (418/681) | 0.98 [0.98, 0.99] | 0.94 [0.91, 0.97] | 0.96 [0.92, 0.98] | 0.97 [0.95, 0.99] | 0.92 [0.88, 0.96] |
| | NET (49/12) | 0.99 [0.98, 1.0] | 1.0 [0.98, 1.0] | 0.96 [0.92, 0.98] | 0.81 [0.69, 0.92] | 1.0 [1.0, 1.0] |
| | IPMN (18/290) | 0.98 [0.95, 0.99] | 0.96 [0.87, 1.0] | 0.94 [0.91, 0.98] | 0.56 [0.29, 0.8] | 1.0 [0.99, 1.0] |

The model reached an AUC of 0.98 (95% Cl: 0.97, 0.99) as well as a sensitivity of 0.94 (469 of 493, 95% Cl: 0.92, 0.97) and a specificity of 0.95 (246 of 262, 95% Cl: 0.92, 0.98).

In order to compare with other methods, the model performances on public data (defined in Figure 2) are also reported in Table 2. Evaluation metrics remained similar to the ones obtained on the whole test set.

The model was also evaluated on subjects with specific lesions characteristics and types. Five subgroups of the cohort were further investigated:
(i) patients with lesions less than 2cm in diameter;
(ii) patients with isodense lesions;
(iii) patients with PDAC;
(iv) patients with NET;
(v) patients with IPMN.

Performances obtained on these subsets are reported in Table 2. The AUC, sensitivity, and specificity remained consistent across the subgroups and equivalent to the ones obtained on the whole test set. The model performed best on the NET subgroup with a sensitivity of 1.0 (95% Cl: 0.98, 1.0). Specificity was slightly weaker on small lesions compared to the other subsets.

### Feature importance on Lesion Detection Sensitivity

The logistic regression model used to predict lesion presence in a patient was based on three features: lesion risk, lesion diameter and MPD diameter. To evaluate the effect of combining these features on performances, an ablation study was carried out. Two additional logistic regression models were trained: a first one with two features, lesion risk and lesion diameter; and a second one using only lesion risk. Table 3 below reports the sensitivity of these three models on the test set, as well as on the subsets previously defined.

**Table 3: Sensitivity of the logistic regression depending on the features used to train it. Median values and 95% confidence intervals in square brackets. D: Diameter. PDAC: Pancreatic Ductal Adenocarcinoma. NET: Neuroendocrine Tumor. IPMN: Intraductal Papillary Mucinous Neoplasm.**

| | Lesion risk, lesion diameter, MPD diameter | Lesion risk, lesion diameter | Lesion risk |
|---|---|---|---|
| Whole test set | 0.94 [0.92, 0.97] | 0.91 [0.86, 0.95] | 0.90 [0.84, 0.94] |
| D≤2*cm* | 0.94 [0.87, 0.98] | 0.91 [0.8, 0.97] | 0.87 [0.77, 0.95] |
| Isodense | 0.95 [0.87, 1.0] | 0.90 [0.91, 0.98] | 0.85 [0.75, 0.96] |
| PDAC | 0.94 [0.91, 0.97] | 0.91 [0.88, 0.95] | 0.89 [0.85, 0.94] |
| NET | 1.0 [0.98, 1.0] | 0.98 [0.93, 1.0] | 0.98 [0.93, 1.0] |
| IPMN | 0.96 [0.87, 1.0] | 0.95 [0.83, 1.0] | 0.90 [0.75, 1.0] |

Using the MPD diameter and the lesion diameter systematically improved lesion detection sensitivity across all groups. On the whole test set, adding the MPD diameter and lesion diameter led to a sensitivity improvement of 4% compared to the baseline model using the lesion risk only. The effect of these two features was particularly strong on isodense lesions with a sensitivity gain of 10% with respect to the model with one feature only.

### MPD Dilatation Detection Performances

Regarding MPD dilatation performances, the logistic regression model was also evaluated on the test set. Results are reported in Table 4 below.

**Table 4: Evaluation metrics obtained by the model for MPD dilatation detection. Data are median values with 95% confidence interval in square brackets. MPD: Main Pancreatic Duct. AUC: Area Under the Curve. PPV: Positive Predictive Value. NPV: Negative Predictive Value.**

| | AUC | Sensitivity | Specificity | PPV | NPV |
|---|---|---|---|---|---|
| Test set (n=756) | 0.97 [0.96, 0.98] | 0.94 [0.89, 0.97] | 0.90 [0.86, 0.94] | 0.85 [0.79, 0.90] | 0.96 [0.93, 0.98] |

An AUC of 0.97 (95% Cl: 0.96, 0.98) was reached as well as a sensitivity of 0.94 (259 of 276, 95%: Cl: 0.89, 0.97) and a specificity of 0.90 (432 of 480, 95%CI: 0.86, 0.94).

### Segmentation Performances

Segmentations predicted by the above mentioned nnUNet were evaluated both quantitatively and qualitatively. The Dice score between the ground truth and the nnUNet segmentation is reported in Table 5 below for the pancreas, lesions, and the MPD.

**Table 5: Dice and NSD measured on the whole test set and public data. The Dice was computed for the pancreas, lesions, and the main pancreatic duct. The NSD was measured for the MPD only. Data are mean values plus/minus standard deviation. NSD: Normalized Surface Dice.**

| | Test set (n=756) | | | Public data (n=361) | | |
|---|---|---|---|---|---|---|
| | Pancreas | Lesions | Main Pancreatic Duct | Pancreas | Lesions | Main Pancreatic Duct |
| Dice | 0.91 ± 0.06 | 0.69 ± 0.34 | 0.58 ± 0.37 | 0.87 ± 0.06 | 0.63 ± 0.33 | 0.53 ± 0.37 |
| NSD | NA | NA | 0.71 ± 0.39 | NA | NA | 0.65 ± 0.40 |

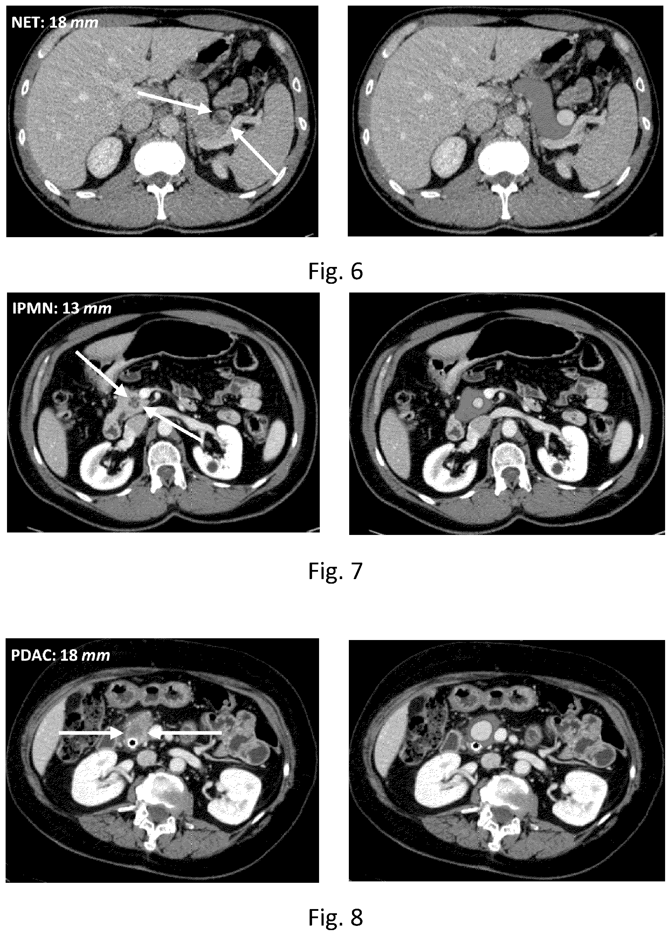

The NSD score was computed for the MPD only. The Dice and the NSD scores were also measured on public data only in order to compare the segmentation model to other works. Qualitative examples of the model segmentations are provided in Figures 6 to 9. In these figures, the left image illustrates the input image (axial portal venous CT slices of the corresponding patient - white arrows indicate lesions location for figures 6 to 8 and the MPD for figure 9) and the right image illustrates the segmented elements on said image (pancreas in red,pancreatic lesion in green and main pancreatic duct in blue - PDAC: Pancreatic Ductal Adenocarcinoma, IPMN: Intraductal Papillary Mucinous Neoplasm, NET: Neuroendocrine Tumor, MPD: Main Pancreatic Duct).

On the whole test set, the mean Dice score was 0.91 (± 0.06), 0.69 (± 0.34) and 0.58 (± 0.37) for the pancreas, lesions, and MPD, respectively. The NSD score for the MPD was 0.71 (± 0.39).

### Discussion

The present document proposes a method to automatically detect patients with pancreatic lesions (e.g. neoplasms) and to identify cases with MPD dilatation. The proposed approach was validated on an independent cohort of 756 subjects. It is showed how using the MPD dilatation information could improve sensitivity for lesion detection compared to a baseline approach solely relying on a segmentation network output. Finally the ability of the model to correctly locate lesions by assessing its segmentation performances was also evaluated.

The model was assessed on subgroups of patients based on lesion characteristics and types. Similar AUC, sensitivity and specificity were observed across the different subgroups, thus highlighting the robustness of the proposed approach. A greater variability was observed in the case of PPV and NPV, mostly due to the imbalance between healthy and diseased subjects in some subgroups such as NET (49 of 312) and IPMN (18 of 290).

The results on public data can be compared to competing deep learning models that used this database to test their approach. The present method showed notably higher performances than the prior art with an AUC of 0.99 (95% Cl: 0.98, 0.99).

Improved performance can notably be attributed to the use of multiples specific features to predict lesion presence. While traditional approaches tend to rely only on the segmentation generated by a convolutional neural network to predict lesions on an image, the proposed method combines the lesion risk, as well as the MPD diameter and lesion diameter, to predict if a subject had a lesion via a logistic regression. To evaluate the effect of combining these features, the sensitivity of the logistic regression according to the features used to train it was measured. The logistic regression model using only the lesion risk, the one most closely resembling state-of-the-art approaches, had a lower sensitivity on all subsets compared to the models using two or three features. In particular, using the MPD diameter systematically improved sensitivity, especially for isodense lesions (plus 5%). Improvement of sensitivity for PDAC detection (plus 5%) when using the lesion and MPD diameter was also observed. Regarding pancreas NET, a milder effect was observed (plus 2% sensitivity). However, as NETs are not linked to MPD dilatation, effect on sensitivity in patient with NET was not anticipated. Finally, even though adding MPD diameter and lesion diameter strongly improved sensitivity in the case of IPMN (plus 6%), the low number of cases (18 of 290) have prevented from drawing any conclusion.

The segmentation network was also leveraged to design a logistic regression model predicting MPD dilatation based on its diameter in the head, body, and tail of the pancreas. An AUC of 0.97 (95% Cl: 0.96, 0.98) was reported. We highlight that even if other deep learning methods allow to segment the MPD, none of them took advantage of the MPD segmentation to provide an alert on its potential dilatation, which is a key finding for radiologists when assessing the pancreas.

Segmentation performances of the algorithm on the pancreas, lesions, and MPD were also assessed. Regarding the pancreas, there were no competing deep learning methods which evaluated the Dice score on the same datasets as in this study. However, three deep learning models which reported a mean Dice score of 0.87 on their test set were found. The segmentation network presented in the present document obtained a similar result on public data and a higher mean Dice score on the whole test set. As for lesion segmentation, a mean Dice score of 0.63 was obtained on public data. This is a 9% improvement over prior art using a nnUNet which reported a Dice score of 0.54 on this dataset. Finally, we could not find Dice scores obtained by other deep learning approaches for the MPD. However, given the small size of the MPD and compared to the Dice score obtained on lesions, the model seemed to show satisfactory performances corroborated by an NSD score of 0.71 on the test set.

## Claims

1. A method implemented by computer means for detecting at least one lesion of a pancreas of a patient in at least one medical image, said method including an inference phase comprising the following steps:
(a) predicting at least one first probability map representing the probability for each pixel or voxel of said image of being part of a pancreatic lesion,
(b) predicting at least one second probability map representing the probability for each pixel or voxel of said image of being part of the pancreas,
(c) predicting at least one third probability map representing the probability for each pixel or voxel of said image of being part of the main pancreatic duct,
(d) segmenting the pancreas, the main pancreatic duct and at least one lesion of said image, based on said probability maps,
(e) determining a head portion, a body portion and a tail portion of said segmented pancreas,
(f) determining a first feature representing a lesion risk based on the first probability map,
(g) determining a second feature representing the maximum size of the lesion,
(h) determining a third feature representing the maximum size of the main pancreatic duct in the head portion of the pancreas,
(i) determining a fourth feature representing the maximum size of the main pancreatic duct in the body portion of the pancreas,
(j) determining a fifth feature representing the maximum size of the main pancreatic duct in the tail portion of the pancreas,
determining a first score based on at least said first feature, second feature and at least one of said third, fourth and fifth features, said first score being representative of a probability that the patient has a pancreatic lesion.

2. The method according to preceding claim, wherein said medical image is a CT scan image.

3. The method according to claim preceding claim, wherein said image is a portal CT scan image.

4. The method according to one of the preceding claims, wherein step (f) comprises the following sub-steps:
- eliminate all the pixels or voxels that are outside the segmented pancreas,
- for each remaining connected component compute said lesion risk by averaging the probabilities of all its pixels or voxels and eliminate connected components with a lesion risk lower than a threshold.

5. The method according to any of the preceding claims, wherein the second feature may be the maximum diameter of the corresponding segmented pancreatic lesion.

6. The method according to the preceding claim, wherein the image is a 3D image, said maximum diameter of the corresponding segmented pancreatic lesion being determined by measuring the 2D Feret diameter of the segmented lesion, slice by slice, along the axial view.

7. The method according to any of the preceding claims, wherein the first, second and third probability maps are obtained using at least one convolutional neural network or model, for example a nnUnet.

8. The method according to any of the preceding claims, wherein the first, second and third probability maps are obtained using a plurality or ensemble of convolutional neural networks or models, each model being able to predict said first, second and third probability maps, the outputs of said models being averaged pixel-wise or voxel-wise to produce each of said probability maps.

9. The method according to the preceding claim, wherein said ensemble of models is trained using k-fold cross-validation process.

10. The method according to any of the preceding claims, wherein the image is a 3D image, step (e) comprising the following sub-steps:
- along the axial view, extract the morphological skeleton of the pancreas segmentation slice by slice,
- obtain a 3D skeleton of the pancreas and transform said skeleton into a graph,
- given the point of the image which is the located at the most right anterior inferior part of the abdomen, identify the point of the graph which is the most distant to it, said point being considered as the tail extremity of the pancreas,
- identify the head of the pancreas as the point in the graph which is the most distant to the tail,
- compute the shortest path between head and tail to obtain the centerline passing through the pancreas and connecting its head and tail extremities,
- divide the centerline in head, body and tail portions,
- for each voxel of the pancreas segmentation, find its closest point on the centerline and assign its corresponding head, body or tail portions.

11. The method according to the preceding claim, wherein for each voxel of the segmented main pancreatic duct, its closest point on the centerline is computed and a location on the head, body or tail portion of the segmented pancreas is assigned to said voxel depending on the location of its closest point on the centerline, the diameter of the main pancreatic duct being measured in each of the head, body and tail portions.

12. The method according to any of the preceding claims, wherein the first score is determined using a first logistic regression model.

13. The method according to any of the preceding claims, wherein it comprises a step of determining a second score based on at least said third, fourth and fifth features, said second score being representative of a probability that main pancreatic duct is dilated.

14. The method according to the preceding claim, wherein the second score is determined using a second logistic regression model.

15. The method according to any of the preceding claims, wherein the first score and/or the second score may also be determined based on at least one other feature from the following list:
- first order statistics of the pancreas diameter, lesion diameter, main pancreatic duct diameter and/or common bile duct diameter,
- lesion location, for example location of the lesion in said head, body and/or tail portion,
- at least one radiomics features of the pancreas, lesion, main pancreatic duct and/or common bile duct.
- 3D shape features of the pancreas, lesion, main pancreatic duct and/or common bile duct.
- 2D shape features and/or first order statistics of these features for pancreas, main pancreatic duct, lesion and/or common bile duct.
